Europäisches Patentamt

**European Patent Office**

Office européen des brevets

(11) Publication number: **0 052 494**
**A2**

# (12) EUROPEAN PATENT APPLICATION

(21) Application number: **81305392.3**

(22) Date of filing: **13.11.81**

(51) Int. Cl.³: **G 02 C 11/00**

(30) Priority: **14.11.80 US 206836**

(43) Date of publication of application:
**26.05.82 Bulletin 82/21**

(84) Designated Contracting States:
**AT DE FR GB IT SE**

(71) Applicant: **AD GLASS CORPORATION**
**P.O. Box 27364**
**Salt Lake City Utah 84127(US)**

(72) Inventor: **Lambert, Clarence Ben**
**1810 South Main Street**
**Salt Lake City Utah 84115(US)**

(74) Representative: **Silverman, Warren et al,**
**HASELTINE LAKE & CO. Hazlitt House 28 Southampton**
**Buildings Chancery Lane**
**London WC2A 1AT(GB)**

(54) Souvenir spectacles.

(57) Souvenir items whose main use is for souvenirs of special events, sporting events, or for advertising must sell at a relatively low price to be commercially viable. The invention produces a souvenir spectacle at a relatively low cost by making a one piece molded body (11) that includes two lens portions (12) connected by a bridge portion (4) and which has a panel projecting therefrom (18) for attachment of a banner (20). A banner piece (20) is secured to the banner attachment panel (18) of the body in spaced relationship thereto. The body also has received lugs (37,38) projecting from each end thereof for pivotally receiving and holding temple pieces (17). A plurality of plaques (34) may be pivotally mounted between the banner and the attachment panel so that the plaques may be aligned face-to-face out of sight behind the banner piece or may be pivoted into respective positions such that they extend outwardly from behind said banner piece for display.

FIG 1

EP 0 052 494 A2

## - 1 -
## SOUVENIR SPECTACLES

The invention is in the field of souvenir spectacles such as souvenir sun glasses that may be sold as souvenirs at sporting or other events, or may be used for advertising.

-Applicant is aware of United States Letters Patent No. 3,418,737 issued December 31, 1968 to a relative of inventor. The glasses specifically described there have not been commercially viable because of the cost involved in producing them. Souvenir items such as these must sell at a relatively low price to be attractive to purchasers.

Applicant has found a way to make such glasses economically feasible by making the body of the glasses of one piece molded plastic construction with temple pieces that snap into place on the body and with souvenir banner and plaques that also merely snap into place on the body. In this way, the banner and plaques may be easily assembled or changed to meet demand.

According to the invention, souvenir spectacles have a one piece molded body that includes two lens portions connected by a bridge portion and which has means such as a back panel or back tabs which extend above the lens portion for attachment of a banner piece. The banner piece is secured to the banner attachment means of the body in spaced relationship with a plurality of plaques pivotally mounted therebetween so that they may be aligned face-to-face out of sight behind the banner piece or may be pivoted into respective positions such that they extend outwardly from behind said banner piece for display. It is preferable that the banner be such that it can merely be snapped into place, and may be made removable.

Temple pieces are pivotally attached to respective ends of the body and are preferably removably snapped into place. In a preferred form of the invention, the hinged ends of the temple pieces have a substantially cylindrical pin formed integrally therewith and the body includes at each end a pair of spaced lugs projecting therefrom with aligned openings therein to receive and hold the pins of the respective temple pieces.

In the accompanying drawings, which represent the best mode presently contemplated for carrying out the invention:

Fig. 1 is a perspective view of the souvenir spectacles of the invention showing a plurality of the display plaques in their open and partially open display positions:

Fig. 2, a front elevation of the body portion of the spectacles;

Fig. 3, a vertical section taken on the line 3-3 of Fig. 2;

Fig. 4, a rear elevation of the banner piece showing the mounting posts;

Fig. 5, a side elevation of one of the banner mounting posts of Fig. 4, drawn to a larger scale;

Fig. 6, an end view of the post of Fig. 5;

Fig. 7, a front elevation of a typical plaque;

Fig. 8, a perspective view of a hinge for joining the temple pieces to the body; and

Fig. 9, a top plan view of the spectacles of Fig. 1.

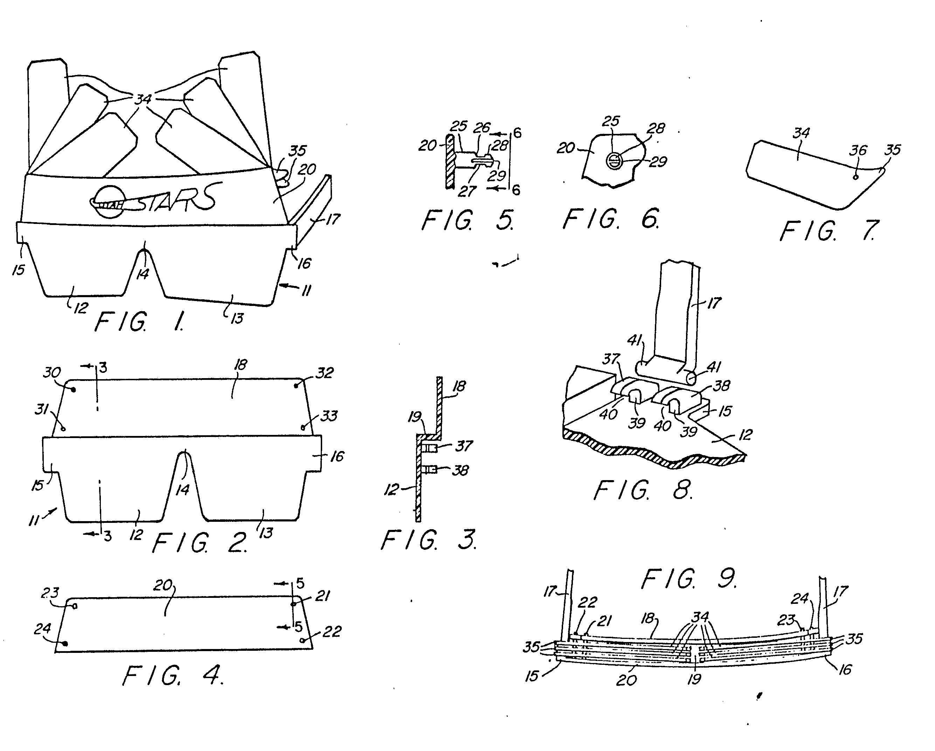

In the spectacles of Fig. 1, body 11 is of one piece molded construction with lens portions 12 and 13 and bridge portion 14 formed of a suitable transparent plastic material having the requisite strength so that no peripheral frame is required to support the lenses. The material is also preferably chosen to provide quality lenses, and will usually be darkened to provide sun glasses. Body extensions 15 and 16 extend laterally in opposite directions adjacent the upper edges of the lens portions and provide points of attachment between body 11 and the temple pieces 17.

As illustrated in Figs. 2 and 3, a back panel 18 is formed integrally with and is a part of body section 11. It extends upwardly from the lens and bridge portions and is offset rearwardly by means of flange 19. The flange extends generally perpendicular to the lens portions and the back panel, so that the back panel extends above the lenses and bridge in spaced, substantially parallel relation thereto.

A banner piece 20, Figs. 1, 4, and 9, is approximately the same shape and size as back panel 18 and is provided with mounting posts 21, 22, 23, and 24 positioned adjacent the four corners thereof. Each of the mounting posts protrudes from the rear surface of the banner and extends substantially perpendicular to the plane of the back panel. Each post, Figs. 5 and 6, is provided with an enlarged, cylindrical section 25, an annular shoulder 26 and a reduced diameter cylindrical portion 27 terminating in a raised lip 28. A slot 29 is formed in the free end of the post and extends inwardly over the length of the reduced portion 27. Each of the posts 21-24 is adapted to snap into and be held in place by receiving holes 30-33 provided in back body panel 18.

Plaques 34, Figs. 1 and 7, include tab portions 35 at one end. A hole 36 is provided in the body of each of the plaques 34 adjacent the tab for pivotally mounting the plaques.

Referring to Figs. 8 and 9, the rear surfaces of both of the body extensions 15 and 16 are provided with a pair of parallel, elongated lugs 37 and 38 which extend substantially perpendicular to the plane of the immediately adjacent lens. Each lug has an opening 39 therein with an entrance 40. The hinge end of each temple piece 17 has an integrally formed cylindrical pin 41. The axis of the pin is substantially perpendicular to the longitudinal axis of the temple piece and the opposite ends of the pin extend beyond the longitudinal edges of the temple piece. The pin is formed at the hinge end of the temple piece and is offset laterally from the temple piece as illustrated in Fig. 8. The entrances 40 to the openings 39 in lugs 38 are slightly smaller than the diameter of the pin 41 on the temple pieces. Lugs 38 are sufficiently resilient so that pin 41 may be snapped into place and held securely in openings 39. In this way, temple pieces 17 are pivotally mounted on body 11 so that they may be folded adjacent body 11 in normal manner when the glasses are not in use and unfolded when the glasses are to be worn.

In the spectacles of the present invention, banner 20 is mounted in the position of Fig. 1 by means of the posts 21, 22, 23, and 24 and openings 30, 31, 32, and 33 in the back panel 18. In assembling the banner on the back panel the free end of each post is forced into its associated opening until the annular shoulder 26 bears against the material of the panel surrounding the opening. In this position the reduced portion 27 is received within the opening and held in place by the raised lip 28 bearing against the rear surface of the panel. The slot 29 allows the two halves of the distal end of the reduced portion to flex towards one another while the raised lip traverses the opening. When the raised lip clears the opening the two halves spring back to their original positions, the lip 28 overlies the edge of the opening and locks the post within the opening. The length of reduced portion 27 corresponds to the thickness of back panel 18. In this way banner 20 is held firmly in place.

When the posts are seated within the openings the banner is held in spaced relation to the back panel by the enlarged, cylindrical sections 25. Thus, an elongated pocket is defined by banner 20, back panel 18, and flange 19. The width of the pocket is equal to the length of the cylindrical sections 25 of the posts. As part of the assembly process a plurality of plaques 34 are arranged in two oppositely-directed stacks and then pivotally mounted on posts 21 and 23 of the banner by passing such posts through the openings 36 of the respective stacks. As the banner is attached to the back panel, the plaques 34 are housed within the pocket and are shielded from view behind the banner except for respective tabs 35. By pressing downwardly on a selected tab the associate plaque can be pivoted into display position about posts 21 or 23 as illustrated in Fig. 1.

The spectacles of the invention lend themselves very well to use as souvenirs. For example, the banner may have the name and logo of a professional sports team thereon, and the various plaques may each have a picture of a different player on the team. The pictures may be provided on one face of the plaques or on both faces of the plaques. When in the form of sun glasses, these spectacles are particularly suited to use during outdoor daylight sporting events such as football and baseball games. In addition to souvenirs of sporting events, the spectacles may also be souvenir of places having the name of a state, city, or other location on the banner and pictures of various sites in that area on the plaques.

When the present sunglasses are assembled the logo printed on the front surface of the banner is prominently displayed. The plaques can be housed within the pocket behind the banner or raised into a viewing position. The plaques may be arranged in any desired order and may be rearranged or replaced merely by detaching the banner and then reassembling the desired plaques on the posts.

While a back panel 18 is shown and described, it should be understood that upstanding tabs containing the holes 30-33 could be used or that other arrangements could be used to easily secure a banner and associated plaques to the body of the spectacles. Also, although it is presently preferred to provide flange 19 to offset panel 18 behind the lens portion of the spectacles, such offset is not necessary and the panel could extend directly upwardly from the lens portion of the body. In such instances, the banner would be forward of the lens portion, but the plaques would operate in the same manner described above since they would be held in position behind the banner by posts 31 and 33 respectively. Alternatively, the banner could be made with a bottom flange which would abut the body.

The glasses of the invention are easily assembled and disassembled and so may advantageously be sold in disassembled form for assembly by the purchasers.

While the glasses are shown and described as including a plurality of plaques 34, it will be realized that some users may not want or need such plaques, and in such cases, the plaques are not assembled into the glasses, the banner being sufficient for the entire souvenir or advertising message or pictures.

Claims:

1. Souvenir spectacles, comprising a one piece molded body (11) including two lens portions (12) connected by a bridge (14) and having attachment means (18) projecting therefrom for attachment of a banner piece (20) and having receiving means (37,38) projecting from each end thereof for pivotally receiving temple pieces (17);a banner piece (20) removably attached in spaced relationship to the attachment means (18) of the main body; and temple pieces (17) pivotally held by the receiving means (37,38).

2. Souvenir spectacles according to Claim 1, wherein there are additionally included a plurality of plaques (34) and means (35,36) for pivotally mounting the plurality of plaques so that they may be aliged face-to-face out of sight behind the banner piece or may be pivoted into respective positions such that they extend outwardly from behind said banner piece for display.

3. Souvenir spectacles according to Claim 1 or 2, wherein the banner piece (20) is attached to the attachment means (18) by posts (21,22,23,24) extending between the banner means and the attachment means.

4. Souvenir spectacles according to Claim 3, wherein the banner piece (20) contains at least two posts (21,22, 23,24) projecting therefrom having the ends thereof formed with slots (29) and adapted to snap into receiving holes (30,31,32,33) in the attachment means of the body.

5. Souvenir spectacles according to Claim 4, wherein the posts (21,22,23,24) each have a cylindrical section (25), an annular shoulder (26), and a reduced diameter cylindrical portion (27) terminating in a raised lip (28), wherein the slot (29) extends through the raised lip (28) and reduced diameter cylindrical portion (27), and wherein the reduced diameter portion is substantially equal in length to the depth of the hole (30,31,32,33) into which the pin is inserted so that the shoulder of the pin rests against the attachment means (18) surrounding one end of the hole and the raised lip rests against the attachment means surrounding the other end of the hole.

6. Souvenir spectacles, according to Claims 2 and 5, wherein the said plaques (34) are pivotally mounted on at least one of the posts (21,22,23,24) extending between the banner means (20) and attachment means (18) so that the plurality of plaques may be aligned face-to-face out of sight behind the banner piece or may be pivoted into respective positions such that they extend outwardly from behind said banner pieces for display.

7. Souvenir spectacles according to any one of the preceding claims, wherein each of the temple pieces (17) has a substantially cylindrical pin (14) formed integrally therewith adjacent the end that is hinged to the body, and wherein the receiving means at each end of the body includes a pair of spaced lugs (37,38) projecting from the body with aligned openings (39) formed therein to receive the pins of the respective temple pieces.

8. Souvenir spectacles according to Claim 7, wherein an entrance (40) is provided to the openings (39) formed in the lugs (37,38), the size of said entrance being slightly smaller than the diameter of the pins (41) of the temple pieces (17) so that said pins may be removably snapped into said openings and be held there.

9. A kit for assembling souvenir spectacles, comprising a one piece molded body (11) including two lens portions (12) connected by a bridge portion (14) and having means (18) projecting therefrom for attachment of a banner piece (20) and having receiving means (37,38) projecting from each end thereof for pivotally receiving temple pieces (17) a banner piece (20) adapted to be attached in spaced relationship to the attachment means of the main body; and temple pieces (17) adapted to be pivotally received by the receiving means.

10. A kit for assembling souvenir spectacles according to Claim 9, wherein the banner piece (20) contains at least two posts (21,22,23,24) having resilient ends thereof adapted to snap into receiving holes (30,31,32,33) in the attachment means (18) of the body.

11. A kit for assembling souvenir spectacles according to Claim 9 or 10, wherein the body (11) includes at each end thereof a pair of spaced lugs (37,38) projecting from the body with aligned openings (29) formed therein, and wherein each of the temple pieces (17) has a substantially cylindrical pin (41) formed integrally therewith adjacent the end that is adapted to be hinged to the body, said pin being adapted to be snapped into and held by the openings formed in the respective pairs of lugs.

12. A kit for assembling souvenir spectacles according to any one of Claims 9 to 11, wherein there are additionally included a plurality of plaques (34) adapted to be pivotally mounted on at least one of the posts (21,22,23, 24) so that they may be aligned face-to-face out of sight behind the banner piece (20) when assembled to the body (11) or may be pivoted into respective positions such that they extend outwardly from behind said banner piece when assembled to the body for display.

0052494

FIG. 1.

FIG. 2.

FIG. 3.

FIG. 4.

FIG. 5.

FIG. 6.

FIG. 7.

FIG. 8.

FIG. 9.

STARS